# NEUE EUROPÄISCHE PATENTSCHRIFT

(11) **EP 0 117 399 B2**
(45) Veröffentlichungstag und Bekanntmachung des Hinweises auf die Entscheidung über den Einspruch: **12.05.1993**
(45) Hinweis auf die Patenterteilung: 11.05.1988
(21) Anmeldenummer: 84100281.9
(22) Anmeldetag: 12.01.1984
(51) Int. Cl.: B60K 26/00

(54) **Steuerschalter für Antriebselemente von Kraftfahrzeugen**
Control switch for propulsion elements of motor vehicles
Commutateur de commande pour éléments de propulsion d'un véhicule automobile

(30) Priorität: 31.01.1983 DE 3303135
(43) Veröffentlichungstag der Anmeldung: 05.09.1984
(73) Patentinhaber: Bayerische Motoren Werke Aktiengesellschaft, 80788 München (DE)
(72) Erfinder: Tichy, Ulrich, D-8044 Unterschleissheim (DE)
(74) Vertreter: Bullwein, Fritz

(56) Entgegenhaltungen:
- DE-A- 1 964 524
- DE-A- 2 304 621
- DE-A- 2 546 987
- DE-A- 3 036 332
- US-A- 3 153 943

## Beschreibung

Die Erfindung bezieht sich auf einen Steuerschalter nach dem Oberbegriff des Patentanspruchs 1.

Für ein programmgesteuertes Automatikgetriebe ist ein Steuerschalter mit einem Schalter bekannt, der ein Schaltglied mit mehreren willkürlich wählbaren Schaltstellungen zum Einstellen von zugeordneten Fahrprogrammen besitzt. (DE-A-3103033) Die einstellbaren Fahrprogramme unterscheiden sich hinsichtlich eines maßgeblichen Parameters. Der Parameter kann z.B. den Kraftstoffverbrauch oder die Belastung wesentlicher Komponenten des Kraftfahrzeugs sein. In einer der Schaltstellungen des Schaltglieds, der Grund-Schaltstellung, ist das eingestellte Fahrprogramm optimiert. Aus verschiedenen Gründen, beispielsweise für die Ermittlung des Kraftstoffverbrauchs im Rahmen einer Typprüfung, kann es wünschenswert sein, während einer Betriebsperiode den maßgeblichen Parameter von Kraftfahrzeugen, die mit einem derartigen Steuerschalter versehen sind, möglichst lange optimal zu halten.

Aus der DE-A-2304621 ist ferner ein willkürlich von Hand in beliebig wählbare Stellungen einstellbarer Choke bekannt, mit dem die Luftzufuhr der Brennkraftmaschine im Leerlauf verringert werden kann und der Startvorgang erleichtert wird. Es ist dabei auch vorgesehen, den Choke automatisch wieder auszuschalten, wenn die Brennkraftmaschine die vorgeschriebene Betriebstemperatur erreicht hat.

Der Erfindung liegt die Aufgabe zugrunde, unter Wahrung der Möglichkeit, die Fahrprogramme frei zu wählen, in bei jeder neuen Betriebsperiode einen maßgeblichen Parameter derartiger Kraftfahrzeuge zu optimieren.

Die Erfindung löst diese Aufgabe durch die kennzeichnenden Merkmale des Patentanspruchs 1.

Durch die Erfindung wird vor jeder neuen Betriebsperiode selbsttätig die Grund-Schaltstellung eingestellt. Dies wird beim Anlassen oder bereits beim vorhergehenden Abstellen der Brennkraftmaschine erreicht. Die Funktion "Anlassen" wird beispielsweise durch Verbindung des Steuerschalters mit einem Anlasserstromkreis realisierbar. Entsprechend kann die Funktion "Abstellen" durch Verbindung mit dem Zündstromkreis realisiert werden. Somit wird beim Abstellen oder Anlassen der Brennkraftmaschine das der Grund-Schaltstellung des Schaltglieds entsprechende Fahrprogramm eingestellt, bzw. beibehalten. Dieses Fahrprogrammm kann sich beispielsweise durch einen niedrigen Kraftstoffverbrauch auszeichnen.

Die konstruktive Realisierung des erfindungsgemässen Steuerschalters kann auf verschiedene Weite erfolgen. Eine besonders einfache Möglichkeit besteht darin, bei Einstellen einer anderen Schaltstellung des Schaltglieds eine Feder vorzuspannen und das Schaltglied in dieser Schaltstellung zu verriegeln. Bei Vorliegen der massgeblichen Bedingungen soll diese Verriegelung aufgehoben werden und das Schaltglied unter der Wirkung der Feder in die Grund-Schaltstellung zurückgeführt werden. Neben diesem mechanischen Antrieb fürdas Schaltglied können beispielsweise auch elektrische Antriebsmittel vorgesehen werden, die das Schaltglied ggf. in die Grund-Schaltstellung führen.

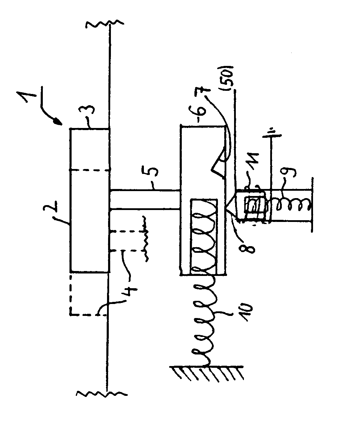

In der Zeichnung ist ein Ausführungsbeispiel der Erfindung dargestellt.

Ein Steuerschalter 1 für ein programmgesteuertes Automatikgetriebe besitzt ein Schaltglied 2, das willkürlich in eine mit ausgezogenen Linien dargestellte Grund-Schaltstellung 3 und eine strichliert dargestellte andere Schaltstellung 4 eingestellt werden kann. In der Grund-Schaltstellung 3 ist das eingestellte Fahrprogramm verbrauchsoptimiert, während es in der Schaltstellung 4 zwar höhere Beschleunigungswerte ermöglicht, jedoch verbrauchsungünstiger ist.

Das Schaltglied 2 ist über ein Verbindungsteil 5 mit einem Verriegelungsteil 6 verbunden, das parallel zum Schaltglied durch dieses bewegt ist. Es besitzt eine Rastnase 7, in die in der Stellung 4 ein Riegel 8 in Eingriff kommt. Der Riegel 8 steht unterwirkung einer Feder 9, während das Verriegelungsteil 6 sich gegen eine Feder 10 abstützt. Ferner ist der aus weichmagnetischem Material bestehende Riegel 8 von einer Einzugswicklung 11 umgeben, die am Anlasserstromkreis (50) angeschlossen ist.

In der Grund-Schaltstellung 3 ist der Riegel 8 ausser Eingriff. Unter der Wirkung der Feder 10 bleibt das Verriegelungsteil 6 und damit das Schaltglied 2 in dieser Schaltstellung. Das Automatikgetriebe arbeitet nach dem verbrauchsoptimierten Fahrprogramm.

Wird das Schaltglied 2 willkürlich in die Schaltstellung 4 verschoben, so gelangt der Riegel 8 in Eingriff mit der Rastnase 2 und hält das Verriegelungsteil 6 und damit das Schaltglied 2 entgegen der Wirkung der Feder 10 in dieser Schaltstellung solange, bis erneut das Schaltglied in die Stellung 3 eingestellt oder die Brennkraftmaschine nach dem Abstellen erneut angelassen wird. Im ersten Fall wird durch das Zurückschieben des Schaltglieds 2 der Riegel 8 mechanisch aus der Rastnase 7 herausbewegt und gibt damit das Verriegelungsteil 6 und damit das Schaltglied 2 frei. Im anderen Fall wird durch die Verbindung mit dem Anlasserstromkreis die Einzugswicklung 11 erregt und der Riegel 8 unter deren magnetischer Wirkung in die unwirksame Ausgangsstellung zurückbewegt. Das Verriegelungsteil 6 wird dann durch die Feder 10 in die Ausgangslage zurückbewegt, so dass bei jeder neuen Fahrt zunächst das verbrauchsoptimierte Fahrprogramm eingestellt ist.

## Patentansprüche

1. Steuerschalter (1) für ein programmgesteuertes Automatikgetriebe von Kraftfahrzeugen, mit einem Schalter, der ein Schaltglied (2) mit mehreren willkürlich wählbaren Schaltstellungen (3,4) zum Einstellen von zugeordneten Fahrprogrammen aufweist dadurch gekennzeichnet, daß das Schaltglied (2) eine Grund-Schaltstellung (3) besitzt, in die es beim Anlassen oder Abstellen des Fahrzeugmotors aus einer anderen Schaltstellung (4) zurückkehrt.

2. Steuerschalter nach Anspruch 1, dadurch gekennzeichnet, dass der Steuerschalter (1) durch einen Riegel (8) in der anderen Schaltstellung (4) entgegen der Wirkung einer Feder (10) gehalten ist, und dass der Riegel (8) bei Vorliegen der Bedingungen unwirksam ist und das Schaltglied (2) unter Wirkung der Feder (10) in die Grund-Schaltstellung (3) zurückkehrt.

## Claims

1. A control switch (1) for a programme-controlled automatic gearing of motor vehicles, comprising a switch which has a switch member (2) with a plurality of arbitrarily-selectable switch positions (3,4) for the setting of associated travel programmes, characterised in that the switch member (2) has a basic switch position (3) into which it returns from another switch position (4) when the vehicle engine is started or stopped.

2. A control switch according to Claim 1, characterised in that the control switch (1) is held by a locking bolt (8) in the other switch position (4) against the action of a spring (10), and that the locking bolt (8) is ineffective when the conditions are present and the switch member (2) returns into the basic switch position (3) under the action of the spring (10).

## Revendications

1. Commutateur de commande (1) pour une boîte de vitesses automatique de véhicules automobiles commandée par programme, avec un commutateurqui comporte un organe de commutation (2) avec plusieurs positions de commutation (3,4) à choisir à volonté pour mettre en place des programmes de conduite coordonnés, commutateur de commande caractérisé en ce que l'organe de commutation (2) possède une position de commutation de base (3) dans laquelle il revient à partir d'une autre position de commutation (4) en cas de démarrage ou d'arrêt du moteur du véhicule.

2. Commutateur de commande selon la revendication 1, caractérisé en ce que le commutateur de commande (1) est maintenu par un verrou (8) dans une autre position de commutation (4) contre l'action d'un ressort (10), et que, en cas d'existence de conditions de fonctionnement, le verrou (8) est inopérant et la pièce de commutation (2) revient dans la position de commutation de base (3) sous l'action du ressort (10).
